(19) Europäisches Patentamt
European Patent Office
Office européen des brevets

(11) **EP 1 474 541 B1**

(12) **EUROPÄISCHE PATENTSCHRIFT**

(45) Veröffentlichungstag und Bekanntmachung des Hinweises auf die Patenterteilung:
**26.03.2008 Patentblatt 2008/13**

(21) Anmeldenummer: **02791744.2**

(22) Anmeldetag: **30.11.2002**

(51) Int Cl.:
*C23C 8/34* *(2006.01)*     *C23C 8/18* *(2006.01)*

(86) Internationale Anmeldenummer:
**PCT/EP2002/013555**

(87) Internationale Veröffentlichungsnummer:
**WO 2003/052158 (26.06.2003 Gazette 2003/26)**

(54) **VERFAHREN ZUR HERSTELLUNG EINER OXIDSCHICHT AUF METALLTEILEN**

METHOD FOR PRODUCING AN OXIDE LAYER ON METALLIC ELEMENTS

PROCEDE DE FABRICATION D'UNE COUCHE D'OXYDE SUR DES PIECES METALLIQUES

(84) Benannte Vertragsstaaten:
**AT BE BG CH CY CZ DE DK EE ES FI FR GB GR IE IT LI LU MC NL PT SE SK TR**

(30) Priorität: **18.12.2001 DE 10162339**

(43) Veröffentlichungstag der Anmeldung:
**10.11.2004 Patentblatt 2004/46**

(73) Patentinhaber:
- **Air Liquide Deutschland GmbH**
  **40235 Düsseldorf (DE)**
  Benannte Vertragsstaaten:
  **DE GB**
- **Messer Group GmbH**
  **65843 Sulzbach (DE)**
  Benannte Vertragsstaaten:
  **AT BE BG CH CY CZ DK EE ES FI FR GR IE IT LI LU MC NL PT SE SK TR**

(72) Erfinder: **SCHMIDT, Hans-Peter**
**40822 Mettmann (DE)**

(74) Vertreter: **Kahlhöfer, Hermann et al**
**Patentanwälte**
**Kahlhöfer Neumann**
**Herzog Fiesser**
**Postfach 10 33 63**
**40024 Düsseldorf (DE)**

(56) Entgegenhaltungen:
**EP-A- 0 655 512        WO-A-99/10556**
**GB-A- 2 159 542**

- **HOFFMANN R: "Oxidationsvorgänge bei Wärmebehandlungen unter Schutzgas" HAERTEREI TECHNISCHE MITTEILUNGEN, CARL HANSER VERLAG. MUNCHEN, DE, Bd. 39, Nr. 2, 1. März 1984 (1984-03-01), Seiten 61-70, XP002087508 ISSN: 0341-101X**
- **KLUEMPER-WESTKAMP H ET AL: "ERFASSUNG DER OXIDATIONSKINETIK VON STAHL MITTELS WIRBELSTROMSENSOREN" HAERTEREI TECHNISCHE MITTEILUNGEN, CARL HANSER VERLAG. MUNCHEN, DE, Bd. 55, Nr. 5, September 2000 (2000-09), Seiten 286-293, XP000963092 ISSN: 0341-101X**
- **LERCHE W ET AL: "VERFAHRENSTECHNISCHE MOEGLICHKEITEN ZUR ERZEUGUNG NACHOXIDIERTER VERBINDUNGSSCHICHTEN MI HOHER KORROSIONSFESTIGKEIT" HAERTEREI TECHNISCHE MITTEILUNGEN, CARL HANSER VERLAG. MUNCHEN, DE, Bd. 57, Nr. 5, 2002, Seiten 349-356, XP001140763 ISSN: 0341-101X**

EP 1 474 541 B1

## EP 1 474 541 B1

**Beschreibung**

Die Erfindung betrifft ein Verfahren zur Herstellung einer Oxidschicht auf Metallteilen, bei welchem die Metallteile in einem Behandlungsraum während einer Aufkohlungsphase bei Temperaturen unterhalb von 1100°C in einer Kohlenmonoxid und Wasserstoff enthaltenden Atmosphäre wärmebehandelt, und während einer Oxidationsphase bei einer Oxidationstemperatur im Bereich von 750° C bis 950°C in einer Atmosphäre, in welcher durch Einleiten eines Oxidationsmittels in den Behandlungsraum ein $PH_2O/PH_2$-Verhältnis zwischen 0,3 und 10 eingestellt wird, unter Bildung einer Oxidschicht oxidiert werden, wobei mindestens während der Oxidationsphase der Sauerstoffpartialdruck unter Einsatz einer Sauerstoffsonde ermittelt und geregelt wird.

Das Vergüten bzw. Einsatzhärten, Karbonitrieren usw. von Massenteilen wird in Ofenanlagen durchgeführt, deren Behandlungsraum Schutz- und/oder Reaktionsgase durchströmen. Dabei wird die Gasatmosphäre im Behandlungsraum eines Ofens so eingestellt, dass eine saubere und blanke Metalloberfläche erzeugt wird. Oxidation ist unerwünscht.

Die Teile werden unter Einsatz von Stickstoff in Kombination mit reaktiven Komponenten (z.B. Methanolspaltgas, Endogas o. ä.) auf die jeweilige Austenitisierungstemperatur erwärmt, thermochemisch behandelt und durch Abschrecken in Öl, Wasser oder flüssigem Salz gehärtet.

In einem anschließenden zweiten Wärmebehandlungsschritt wird durch Anlassen der gehärteten Teile die geforderte Härte eingestellt. Das Anlassen erfolgt bei Temperaturen zwischen 100°C und 550°C in einer Luft- oder Stickstoffatmosphäre.

Bei diesen Anlassbedingungen kann eine Oxidation des Eisens zu Magnetit ($Fe_3O_4$) stattfinden. Diese entstandene Oxidschicht weist keine ausreichende Schichtdicke auf, um eine optisch ansprechende und gleichmäßig dekorative Oberfläche darzustellen.

Im Anschluss an das Wärmebehandlungsverfahren werden deshalb Beschichtungsprozesse durchgeführt, die eine optisch ansprechende und gleichmäßig dekorative Schicht auf den Oberflächen erzeugen. Das Aufbringen dieser Deckschichten erfolgt häufig durch aufwendige nasschemische Prozesse (Brünieren, Phosphatieren u.a.). Hierbei kommen Säuren, Laugen, hochkonzentrierte Salzlösungen und Waschwässer zum Einsatz, die große Mengen an Sonderabfällen und Emissionen verursachen. Diese Beschichtungsverfahren verursachen einen erheblichen Verfahrensaufwand und zusätzliche Kosten.

Alternativ hierzu wird bei einem Verfahren der eingangs genannten Gattung gemäß der DE- C 197 36 514, die Deckschicht durch gezielte Oxidation der zu behandelnden Eisenwerkstoffe erzeugt. Dabei werden die zu wärmebehandeinden Teile während des Härteprozesses (Haltephase) definiert oxidiert und so im Wärmebehandlungsofen gleichzeitig gehärtet und geschwärzt. Im Verlauf des Wärmebehandlungsprozesses wird eine oxidierend wirkende Komponente (Oxidationsmittel) in den Behandlungsraum eingespeist. Es stellt sich nach kurzer Zeit eine für Eisen oxidierende Ofengasatmosphäre ein und es bildet sich spontan eine geschlossene Eisenoxidschicht auf der Werkstoffoberfläche, was durch die folgende chemische Reaktion dargestellt werden kann.

$$Fe + H_2O \Leftrightarrow FeO + H_2$$

Diese erzeugte Sperrschicht verhindert eine unerwünschte Entkohlung der Randzone der Legierung. Aufgrund der definiert eingestellten Ofengasatmosphäre stellt sich ein bestimmtes $P_{H2O}/P_{H2}$-Verhältnis ein, das die Eisenoxidstruktur und die Wachstumsgeschwindigkeit des Oxids positiv beeinflusst. Als besonders vorteilhaft haben sich Oxidschichtdicken von einigen Mikrometern (max.10 $\mu$m) erwiesen.

Die Wärmebehandlung und die Oxidation der Teile laufen in separaten Verfahrensschritten in dem gemeinsamen Behandlungsraum ab. Dieses Verfahren ermöglichte erstmals eine im wesentlichen umweltfreundlich Erzeugung dekorativer und korrosionsbeständiger Deckschichten.

EP 0 655 512 of offenbart ein Verfahren zur Herstellung einheitlicher Oxidschichten im Anschluß an ein Nitrier- oder Nitrocarburierverfahren mit einer geregelten Oxidationsatmosphäre.

Der vorliegenden Erfindung liegt die Aufgabe zugrunde, eine Verbesserung des gattungsgemäßen Verfahrens hinsichtlich der Reproduzierbarkeit der Herstellung deckender, guthaftender und korrosionsbeständiger Deckschichten auf eisenhaltigen Metallteilen und der Wirtschaftlichkeit des Prozesses anzugeben.

Diese Aufgabe wird ausgehend von dem eingangs genannten Verfahren erfindungsgemäß dadurch gelöst, dass der Sauerstoffpartialdruck derart geregelt wird, dass die Sauerstoffsonde eine Sondenspannung im Bereich zwischen 890 mV und 940 mV ergibt.

Die Sondenspannung wird während der Oxidationsphase im Temperaturintervall von 750°C bis 950°C auf einen Wert im Bereich von 890 mV bis 940 mV gehalten. Dabei wird der einzustellenden Sondenspannung die folgende Abhängigkeit von dem Partialdruckverhältnis ($PH_2O/PH_2$) zugrunde gelegt:

## Spannung (mV) = (LOG(PH₂O/PH₂) −13027/T + 3,2906)*T*0,0992

(T in Kelvin)

Die Sondenspannung ist ein Maß für das Oxidationspotenzial (Sauerstoffaktivität) im Behandlungsraum. Es hat sich überraschend gezeigt, dass bei eisenhaltigen Metallteilen innerhalb dieses engen Prozessfensters hinsichtlich des Oxidationspotenzial eine optimale guthaftende und dichte Oxidschicht erhalten wird. Dies kann auf den Fehlordnungsgrad des dabei gebildeten Eisenoxids zurückgeführt werden. Im genannten Temperaturbereich und bei den durch die Sondenspannung definierten Sauerstoffpartialdrücken handelt sich dabei um Wüstit ($Fe_{1-y}O$). Der durch das erfindungsgemäße Verfahren erzeugten Fehlordnungsgrad (y) des Wüstits liegt im Bereich zwischen 0,05 und 0,12, was die Ausbildung einer dichten und guthaftenden Oxidationsschicht begünstigt.

Außerdem wird bei einem Sauerstoffpartialdruck in einem Bereich, wie er durch den genannten Sondenspannungsbereich definiert ist, eine Verkürzung der Oxidationsdauer erreicht, so dass sich auch von daher eine "Produktivitätssteigerung" gegenüber dem bekannten Verfahren ergibt.

Damit einhergehend führt die Verkürzung der Oxidationsdauer auch zu einer Verringerung der ansonsten häufig feststellbaren partiellen Randentkohlung des Werkstoffes, die durch eine Reaktion des Sauerstoffs im Bereich der Korngrenzen hervorgerufen wird (Korngrenzenangriff).

Weiterhin wird in der an die Oxidationsphase anschließenden Aufheizung des Behandlungsraumes für eine nachfolgend zu behandelnde Charge ein schnellerer Aufbau des erforderlichen Kohlenstoffpegels der Endogasatmosphäre erreicht.

Die gebildete FeO-Oxidschicht weist eine gleichmäßige Struktur auf, ist gut haftend, kratzfest, blasen- und kontaktstellenfrei. Innerhalb einer kurzen Oxidationszeit (typischerweise weniger als 20 Minuten) ergibt sich infolge der definierten Sauerstoffaktivität eine Oxidschicht (FeO-Schicht) mit einer Dicke von weniger als 10 μm. Diese so aufgewachsene Schicht ist kompakt, deckend, mit dem Grundwerkstoff gut verzahnt und hat eine ansprechende schwarze Farbe.

Bei einem Sauerstoffpartialdruck; der eine Sondenspannung von mehr als 940 mV ergibt, erfolgt der Aufbau der Oxidschicht zu langsam, so dass es zu verstärkter partieller Randentkohlung des Werkstoffs kommt. Bei einem zu hohen Sauerstoffpartialdruck, bei dem sich eine Sondenspannung von weniger als 890 mV einstellt, wird hingegen eine unerwünscht dicke Oxidationsschicht erzeugt, die partiell abplatzen oder Blasen bilden kann. Dieser Defekt macht sich auch dadurch bemerkbar, dass sich Oxidpartikel abwischen lassen. Die Ursache sind zu dicke Oxidschichten, die aufgrund des höheren Fehlordnungsgrades (y) mit einer größeren Geschwindigkeit (mm/Stunde) aufwachsen.

Bei dem Oxidationsmittel handelt es sich üblicherweise um destilliertes Wasser, wobei andere Oxidationsmittel, wie Luft oder Sauerstoff nicht ausgeschlossen sein sollen.

Vorzugsweise wird der Sauerstoffpartialdruck so geregelt, dass die Sauerstoffsonde eine Sondenspannung im Bereich zwischen 900 mV und 925 mV ergibt. Dieser Bereich der Sondenspannung erweist sich als besonders geeigneter Kompromiss zwischen optimalen Oxideigenschaften und minimaler Randentkohlung einerseits, sowie der gewünschten schwarzen Farbe andererseits.

Es wird eine Verfahrensvariante bevorzugt, bei der in den Behandlungsraum eine erste konstante Teilmenge des Oxidationsmittels und eine zweite Teilmenge des Oxidationsmittels eingeleitet werden, wobei das Einleiten der zweiten Teilmenge geregelt und in Abhängigkeit von der Sondenspannung erfolgt. Hierbei wird nur eine Teilmenge des gesamten Oxidationsmittels geregelt in den Behandlungsraum eingeleitet (Regelmenge), während die andere Teilmenge - bei der es sich um die geringere Teilmenge handeln kann - nicht geregelt werden muss (Grundmenge). Dies trägt zu einer Vereinfachung der Regelung und zu einer Verringerung des apparativen Aufwands bei.

Eine weitere Verbesserung dieser Verfahrensvariante ergibt sich, wenn das Einleiten der zweiten Teilmenge taktweise erfolgt. Die taktweise Zufuhr des Oxidationsmittels führt dazu, dass die Regelkonstanz besser ist. Der zu regelnde Sollwert schwingt hierdurch kaum, so dass die Abweichung der Sollspannung nur wenige mV (Millivolt) - zum Beispiel +-1 Millivolt - beträgt.

Es wird eine Verfahrensweise bevorzugt, bei der in den Behandlungsraum ein Stickstoffstrom eingeleitet wird, der in Abhängigkeit von der Zusammensetzung der Atmosphäre im Behandlungsraum eingestellt wird. Mittels des variablen Stickstoffstroms wird die Verweilzeit der Gaskomponenten beeinflusst.

In dem Zusammenhang ist zu beachten, dass die Verweilzeit der Komponenten in der Gasphase sich im zeitlichen Verlauf der Sondenspannung widerspiegelt, der für das Ergebnis der Oxidbildung mitentscheidend ist. Insbesondere in den ersten Minuten eines Gasphasenwechsels von einer Aufkohlungsphase zu der Oxidationsphase kann die Keimbildung des Oxids auf der metallischen Eisenoberfläche von der Gasphase beeinflusst werden. Bei einem zu schnellen Absenken des Sauerstoffpartialdrucks ist die Zahl der gebildeten Oxidkeime gering, so dass die Oxidfarbe mehr in den Grauton übergeht. Die Absenkgeschwindigkeit der Sondenspannung von der Aufkohlungsphase (mit einer Sondenspannung von z. B. 1060 mV) zu der Oxidationsphase (mit einer Sondenspannung von z. B. 920 mV) hat somit einen Einfluss auf das Ergebnis der Oxideigenschaften und ist je Werkstoff und Bauteilform durch Versuche zu optimieren.

Ein optimales Ergebnis hinsichtlich der Eigenschaften der Oxidschicht auf den Metallteilen wird erhalten, wenn die maximal Oxidationstemperatur 830°C beträgt. Eine optimale Sondenspannung wird hierbei um 920 mV. Ein Absenken der Oxidationstemperatur ist für die Oxideigenschaften positiv. Hierbei spielen die konkreten eingesetzten Werkstoffe und die gewünschte Kernhärte eine maßgebliche Rolle.

Aber nicht nur die zudosierte Menge an Oxidationsmittel ist für die Qualität der erzeugten Oxidschicht wichtig, sondern auch die Menge an Stickstoff, die gemeinsam mit dem Oxidationsmittel in der Behandlungsraum gegeben wird. Es hat sich gezeigt, dass Stickstoffmengen von 6 bis 12 m$^3$ pro Stunde optimal sind. Durch die Variation dieser Menge an Stickstoff kann die Farbe und Gleichmäßigkeit des zu bildenden Oxids verbessert werden. Die Stickstoffmenge richtet sich natürlich auch nach dem freien Volumen des Behandlungsraumes und darf aus Sicherheitsgründen eine Mindestmenge nicht unterschreiten.

Es hat sich als besonders günstig erwiesen, den Behandlungsraum nach Abschluss der Oxidationsphase auf die Aufkohlungstemperatur zu erhöhen und dabei im Behandlungsraum einen Kohlenstoffpegel von 0,2 bis 0,3 %C einzustellen. Dadurch wird erreicht, dass das Wasser schneller und effizienter mit dem Fettungsgas (Kohlenwasserstoffe, zum Beispiel Erdgas oder Propan) reagieren kann und dadurch der Sauerstoffpartialdruck deutlich fällt, bzw. die Sondenspannung steigt. Einen günstigen Spannungswert, bei der eine neue Charge in den Behandlungsraum eingefahren werden kann, ist 1000 mV. Ab dieser Spannung gibt es keinen Unterschied zu den üblichen Chargierungen, bei denen keine Oxidation vorangegangen sind, denn hierbei tritt durch das Öffnen der Ofentüren immer Luft in den Behandlungsraum, wodurch die Sondenspannung auf niedrige Werte fällt. Es wird ein möglichst schneller Wechsel von Oxidation in eine neutrale bzw. aufkohiende Endogasphase angestrebt. Durch diese spezielle Fahrweise der Formierung ergeben sich übliche Formierungszeiten von 10 bis 15 Minuten, wodurch sich nur eine geringe Verlängerung der Behandlungsdauer ergibt.

Das erfindungsgemäße Verfahren ist besonders geeignet für die Herstellung von Deckschichten im diskontinuierlichen Betrieb. Es hat sich aber auch eine Verfahrensvariante als günstig erwiesen, bei welcher die Metallteile zum Härten und zur Herstellung der Oxidschicht kontinuierlich durch den Behandlungsraum geleitet werden.

Nachfolgend wird die Erfindung anhand von Ausführungsbeispielen näher erläutert:

## **Ausführungsbeispiel 1:**

In einem diskontinuierlich arbeitenden Mehrzweckkammerofen (Handelsname: TQ 10) wurden Werkzeugaufnahmen aus dem Einsatzstahl 16 MnCr 5 auf Chargiergestellen platziert und fixiert. Diese wurden in den Heiz- und Behandlungsraum gefahren und auf Temperatur gebracht. Als Trägergas durchströmte während der gesamten Aufkohlungsphase ein Endogas (20% CO, 40% H$_2$, Rest N$_2$), welches aus Erdgas hergestellt wird, kontinuierlich den Mehrzweckkammerofen. Der Kohlenstoffpegel der Gasphase wurde durch Zugabe von Kohlenwasserstoffen so lange.geregelt, bis der gewünschte Randkohlenstoffgehalt von 0,75 %C und die erforderliche Einsatzhärtetiefe (Eht) von 1,20 mm Eht erreicht wurde. Der gesamte Prozess wurde über das vorhandene Prozessleitsystem geregelt bzw. gesteuert. Bei einer Eht von 1,10 mm wurde die Ofentemperatur auf 830°C herunter geregelt und der Kohlenstoffpegel von 0,75 mm konstantgehalten.

Kurz vor Ende der Behandlungszeit und Erreichen der geforderten Eht von 1,20 mm wurden Wasser als Oxidationsmittel gemeinsam mit Stickstoff in den Behandlungsraum des Ofens eingedüst. Die Volumenströme des oxidierenden Reaktionsmittels und des Stickstoffs wurden so eingestellt, dass sich ein PH$_2$O/PH$_2$-Verhältnis im Behandlungsraum des Ofens ausbildete, das eine konstante Sondenspannung von 920 mV ergibt. Über eine Zeitspanne von 12 Minuten bildete sich eine dünne, gut haftende FeO-Oxidschicht mit einer Dicke von 5 μm und mit blau-schwarzer Farbe.

**Folgende Kriterien wurden erfüllt:**

1. gut haftende, schwarze Oxidschicht
2. keine hellen Stellen durch Kontaktstellen
3. keine Blasenbildung und Oxidabplatzungen
4. Oberflächenhärte vor dem Anlassen : 57 - 58 HRC
5. Oxidschicht haftet auch nach dem Anlassen (180 °C, 3 Stunden
6. Oberflächenhärte nach dem Anlassen: 52 - 54 HRC
7. keine Randentkohlung
8. Gesamturteil: keine Mängel

Der nach der Oxidationsbehandlung gewünschte C-Pegel der Ofengasatmosphäre wurde nach kurzer Zeit wieder erreicht, so dass keine Oxidation und keine Entkohlung der nachfolgenden Charge auftrat. Eine Wasserkondensation an den kalten Stellen der Vorkammer und Abgasführungen wurde nicht beobachtet. Die Reproduzierbarkeit der Oxidationsverläufe war einwandfrei.

Die Korrosionsbeständigkeit dieser nach dem erfindungsgemäßen Verfahren oxidierten Teile, ist besser als die herkömmlich beschichteten, brünierten Teile, so dass die Lagerfähigkeit der Teile verlängert wurde, ohne dass störender Rost sich bildete. Das Einölen der oxidierten Teile bzw. das Aufbringen eines Fluids, wie es beim Brünieren erfolgt, kann entfallen, ohne dass sich Flugrost bildet. Durch den Wegfall der oberflächenaktiven Flüssigkeiten brauchten die Teile auch nicht bei nachfolgenden mechanischen Bearbeitungsvorgängen aufwendig gereinigt zu werden, wobei durch die fehlende anhaftende Restflüssigkeit die Standzeit von Bohremulsion verlängert wird, da eine Kontamination nicht erfolgen kann.

Vor dem Brünierungsprozess müssen die abgehärteten Teile mittels Sandstrahlen entpassiviert werden, damit die Bildung der 1 bis 2 $\mu$m dicken Schicht erfolgen kann. Sandkörner und Partikel setzen beim Sandstrahlen sich sehr leicht in Sackbohrungen und Ritzen ab, die Bohrer und Schneidwerkzeuge schädigen und demzufolge die Standzeit der Werkzeuge stark herabsetzen, so dass aufwendige, sorgfältige Reinigungsarbeiten der Teile erfolgen müssen. Diese Kosten und Zeitverluste konnten durch den Einsatz des erfindungsgemäßen Beschichtungsverfahrens eingespart werden und eine schnelle Weiterverarbeitung der Teile erfolgen.

## Patentansprüche

1. Verfahren zur Herstellung einer Oxidschicht auf eisenhaltigen Metallteilen, bei welchem die Metallteile in einem Behandlungsraum während einer Aufkohlungsphase bei Temperaturen unterhalb von 1100°C in einer Kohlenmonoxid und Wasserstoff enthaltenden Atmosphäre wärmebehandelt, und während einer Oxidationsphase bei einer Oxidationstemperatur im Bereich von 750° C bis 950°C in einer Atmosphäre, in welcher durch Einleiten eines Oxidationsmittels in den Behandlungsraum ein $PH_2O/PH_2$-Verhältnis zwischen 0,3 und 10 eingestellt wird, unter Bildung einer Wüstit-schicht ($Fe_{1-y}O$) oxidiert werden, wobei mindestens während der Oxidationsphase der Sauerstoffpartialdruck unter Einsatz einer Sauerstoffsonde ermittelt wird, **dadurch gekennzeichnet, dass** der Sauerstoffpartialdruck derart geregelt wird, dass die Sauerstoffsonde eine Sondenspannung im Bereich zwischen 890 mV und 940 mV anzeigt.

2. Verfahren nach Anspruch 1, **dadurch gekennzeichnet, dass** die Sauerstoffsonde eine Sondenspannung im Bereich zwischen 900 mV und 925 mV anzeigt.

3. Verfahren nach Anspruch 1 oder 2, **dadurch gekennzeichnet, dass** in den Behandlungsraum eine erste konstante Teilmenge des Oxidationsmittels und eine zweite Teilmenge des Oxidationsmittels eingeleitet werden, wobei das Einleiten der zweiten Teilmenge geregelt und in Abhängigkeit von der Sondenspannung erfolgt.

4. Verfahren nach Anspruch 3, **dadurch gekennzeichnet, dass** das Einleiten der zweiten Teilmenge geregelt und in Abhängigkeit von der Sondenspannung erfolgt.

5. Verfahren nach Anspruch 3 oder 4, **dadurch gekennzeichnet, dass** das Einleiten der zweiten Teilmenge taktweise erfolgt.

6. Verfahren nach einem der vorhergehenden Anspruche, **dadurch gekennzeichnet, dass** in den Behandlungsraum ein Stickstoffstrom eingeleitet wird, der in Abhängigkeit von der Zusammensetzung der Atmosphäre im Behandlungsraum verändert wird.

7. Verfahren nach einem der vorhergehenden Ansprüche, **dadurch gekennzeichnet, dass** der Behandlungsraum nach Abschluss der Oxidationsphase auf die Aufkohlungstemperatur gebracht und dabei im Behandlungsraum ein Kohlenstoffpegel im Bereich von 0,2 bis 0,3 % C eingestellt wird.

8. Verfahren nach Anspruch 7, **dadurch gekennzeichnet, dass** der Kohlenstoffpegel geregelt wird, wobei ein in den Behandlungsraum eingeleiteter Propan-Gasstrom als Stellgröße der Regelung eingesetzt wird.

9. Verfahren nach einem der vorhergehenden Ansprüche, **dadurch gekennzeichnet, dass** die Oxidationstemperatur optimal 830°C beträgt.

10. Verfahren nach einem der vorhergehenden Ansprüche, **dadurch gekennzeichnet, dass** die Metallteile zum Härten und zur Herstellung der Oxidschicht kontinuierlich durch den Behandlungsraum geleitet werden.

**Claims**

1. Process for producing an oxide layer on ferrous metal pieces in which the metal pieces are heat treated in a treatment compartment during a carburization phase at temperatures below 1100°C in an atmosphere containing carbon monoxide and hydrogen, and are oxidized during an oxidation phase at an oxidation temperature in the range from 750°C to 950°C in an atmosphere in which a $PH_2O/PH_2$ ratio between 0.3 and 10 is set by introducing an oxidizing agent into the treatment compartment, with formation of a wuestite layer ($Fe_{1-y}O$), wherein at least during the oxidation phase the oxygen partial pressure is determined using an oxygen probe, **characterized in that** the oxygen partial pressure is subjected to closed-loop control in such a manner that the oxygen probe indicates a probe voltage in the range between 890 mV and 940 mV.

2. Process according to Claim 1, **characterized in that** the oxygen probe indicates a probe voltage in the range between 900 mV and 925 mV.

3. Process according to Claim 1 or 2, **characterized in that** a first constant subquantity of the oxidizing agent and a second subquantity of the oxidizing agent are introduced into the treatment compartment, wherein the introduction of the second subquantity proceeds under closed-loop control and as a function of the probe voltage.

4. Process according to Claim 3, **characterized in that** the introduction of the second subquantity proceeds under closed-loop control and as a function of the probe voltage.

5. Process according to Claim 3 or 4, **characterized in that** the introduction of the second subquantity proceeds in cycles.

6. Process according to one of the preceding claims, **characterized in that** a nitrogen stream is introduced into the treatment compartment, which nitrogen stream is modified as a function of the composition of the atmosphere in the treatment compartment.

7. Process according to one of the preceding claims, **characterized in that** the treatment compartment, after completion of the oxidation phase, is brought to the carburization temperature and in this process a carbon level in the range of 0.2 to 0.3% C is set in the treatment compartment.

8. Process according to Claim 7, **characterized in that** the carbon level is subjected to closed-loop control, wherein a propane gas stream introduced into the treatment compartment is used as variable of the closed-loop control.

9. Process according to one of the preceding claims, **characterized in that** the oxidation temperature is optimally 830°C.

10. Process according to one of the preceding claims, **characterized in that** the metal pieces, for hardening and for producing the oxide layer, are continuously passed through the treatment compartment.

**Revendications**

1. Procédé destiné à la fabrication d'une couche d'oxyde sur des pièces métalliques contenant du fer, lors duquel les pièces métalliques subissent un traitement thermique dans un espace de traitement dans une atmosphère contenant du monoxyde de carbone et de l'hydrogène, pendant une phase de carburation à des températures en dessous de 1100°C et lors duquel, et subissent une oxydation pendant une phase d'oxydation à une température d'oxydation dans le domaine de 750°C à 950°C dans une atmosphère, dans laquelle, par introduction d'un agent d'oxydation dans l'espace de traitement on ajuste un rapport $P_{H2O}/P_{H2}$ compris entre 0,3 et 10, en formant une couche de Wustite ($Fe_{1-y}O$), la pression partielle d'oxygène étant déterminée au moins pendant la phase d'oxydation par utilisation d'une sonde à oxygène, **caractérisé en ce que** la pression partielle d'oxygène est réglée de telle sorte que la sonde à oxygène indique une tension de sonde dans le domaine compris entre 890 mV et 940 mV.

2. Procédé selon la revendication 1, **caractérisé en ce que** la sonde à oxygène indique une tension de sonde dans le domaine compris entre 900 mV et 925 mV.

3. Procédé selon la revendication 1 ou 2, **caractérisé en ce que**, dans l'espace de traitement, l'on introduit une première quantité partielle constante de l'agent d'oxydation et une seconde quantité partielle de l'agent d'oxydation, l'introduction de la seconde quantité partielle étant réglée et se faisant en fonction de la tension de sonde.

4. Procédé selon la revendication 3, **caractérisé en ce que** l'introduction de la seconde quantité partielle est réglée et se fait en fonction de la tension de sonde.

5. Procédé selon la revendication 3 ou 4, **caractérisé en ce que** l'introduction de la seconde quantité partielle se fait d'une façon intermittente.

6. Procédé selon l'une quelconque des revendications précédentes, **caractérisé en ce que**, dans l'espace de traitement, l'on introduit un courant d'azote, qui est modifié en fonction de la composition de l'atmosphère dans l'espace de traitement.

7. Procédé selon l'une quelconque des revendications précédentes, **caractérisé en ce que** l'espace de traitement est amené après achèvement de la phase d'oxydation à la température de carburation et **en ce que** dans l'espace de traitement, l'on ajuste un niveau de carbone dans le domaine de 0,2 à 0,3 % de C.

8. Procédé selon la revendication 7, **caractérisé en ce que** le niveau de carbone est réglé en utilisant, en tant que grandeur de consigne de réglage, un courant gazeux de propane introduit dans l'espace de traitement.

9. Procédé selon l'une quelconque des revendications précédentes, **caractérisé en ce que** la température d'oxydation est, d'une manière optimale, de 830°C.

10. Procédé selon l'une quelconque des revendications précédentes, **caractérisé en ce que** pour être durcies et pour fabriquer la couche d'oxyde les pièces métalliques sont introduites d'une manière continue dans l'espace de traitement.

**EP 1 474 541 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19736514 C
- EP 0655512 A